# EUROPEAN PATENT APPLICATION

(11) **EP 4 679 599 A1**
(43) Date of publication of application: **14.01.2026**
(21) Application number: 23962005.7
(22) Date of filing: 22.12.2023
(51) Int. Cl.: H01M 50/244, H01M 50/204, H01M 10/613, H01M 10/625

(54) **BATTERY AND ELECTRIC DEVICE**

(71) Applicant: Contemporary Amperex Technology Co., Limited, Ningde, Fujian 352100 (CN)
(72) Inventor: YAO, Pengcheng, Ningde, Fujian 352100 (CN); CHEN, Xingdi, Ningde, Fujian 352100 (CN); WANG, Peng, Ningde, Fujian 352100 (CN); LONG, Chao, Ningde, Fujian 352100 (CN)
(74) Representative: Ziebig Hengelhaupt Intellectual Property Attorneys Patentanwaltskanzlei PartGmbB
(86) International application number: PCT/CN2023/141222
(87) International publication number: WO 2025/129683

(57) **Abstract**

The present application provides a battery and an electric device. The battery comprises a case, battery cells and a protection plate. The case has an accommodating cavity. The case comprises a top wall, the top wall is located on the upper side of the accommodating cavity in the vertical direction, and a flow channel for a heat exchange medium to flow is formed in the top wall. The battery cells are accommodated in the accommodating cavity. The protection plate is provided on the side of the top wall distant from the battery cells and is connected to the top wall. The protection plate can protect the top wall from the upper side, so as to reduce the impact force on the top wall applied from the upper side, thereby reducing deformation of the top wall, improving the uniformity of heat exchange, reducing the risk of heat exchange medium leakage, and improving the reliability of the battery.

## Description

The present application relates to the technical field of batteries, and in particular, to a battery and an electric device.

### BACKGROUND

Batteries are widely used in electronic devices, such as mobile phones, laptop computers, electric bicycles, electric vehicles, electric airplanes, electric ships, electric toy cars, electric toy ships, electric toy airplanes, and electric tools.

In the development of battery technologies, how to improve battery reliability is a research direction in the battery technologies.

### SUMMARY

The present application provides a battery and an electric device, which can improve the reliability of the battery.

In a first aspect, embodiments of the present application provide a battery. The battery includes a case, a battery cell, and a protection plate. The case is provided with an accommodating cavity. The case includes a top wall. The top wall is located on an upper side of the accommodating cavity in a vertical direction, and the top wall is internally provided with a flow channel for a heat exchange medium to flow. The battery cell is accommodated in the accommodating cavity. The protection plate is arranged on a side of the top wall distal to the battery cell and is connected to the top wall.

The flow channel is formed in the top wall of the case. Thus, the flow channel is less affected when the lower side of the case is subjected to an external impact. The protection plate can protect the top wall from the upper side, so as to reduce the impact force on the top wall applied from the upper side, thereby reducing the deformation of the top wall, improving the uniformity of heat exchange, reducing the risk of leakage of the heat exchange medium, and improving the reliability of the battery.

In some embodiments, the battery further includes a reinforcing structure. The reinforcing structure is arranged on a side of the protection plate facing away from the top wall and is fixed to the protection plate. The reinforcing structure can improve the overall strength of the battery. It can reduce the deformation of the protection plate and reduce the risk of compression of the top wall by the protection plate when the protection plate is subjected to an external impact, thereby improving the reliability of the battery.

In some embodiments, the reinforcing structure is configured to be connected to an external component. The reinforcing structure of the battery can provide mounting points for some components of the electric device, thereby reducing the number of parts, improving the integration level, and simplifying the assembly process.

In some embodiments, the reinforcing structure includes a beam structure. The beam structure possesses high strength and thus can reduce the deformation of the protection plate when the protection plate is subjected to an external impact.

In some embodiments, the reinforcing structure includes a mounting plate and a first connecting member fixed to the mounting plate. The mounting plate is fixed to the protection plate, and the first connecting member is configured to be connected to the external component. The first connecting member can provide mounting points for some components of the electric device, thereby reducing the number of parts, improving the integration level, and simplifying the assembly process.

In some embodiments, the case includes a frame body, a heat exchange plate, and a bottom plate. The heat exchange plate and the bottom plate are located on the upper side and the lower side of the frame body in the vertical direction, respectively. The frame body, the heat exchange plate, and the bottom plate define the accommodating cavity. The top wall includes the heat exchange plate, and the heat exchange plate is configured to exchange heat with the battery cell.

Integrating the heat exchange plate into the case can reduce the number of parts of the battery, improve the integration level of the battery, and increase the energy density of the battery.

In some embodiments, the battery further includes a second connecting member. The second connecting member connects the protection plate, the heat exchange plate, and the frame body. The second connecting member fixes both the protection plate and the heat exchange plate to the frame body, which can improve the stability of the protection plate and the heat exchange plate.

In some embodiments, the heat exchange plate includes a first plate and a second plate stacked in the vertical direction. The first plate is located on a lower side of the second plate in the vertical direction. The first plate is a flat plate and is connected to the battery cell, and the second plate is connected to the protection plate. A side of the second plate facing the first plate is provided with a first recess, and the first plate covers the first recess and forms the flow channel; a first protrusion is formed on the second plate at a position corresponding to the first recess, and the first protrusion protrudes toward a side distal to the first plate.

The first plate and the second plate may be independently formed, which enables flexible configuration of the shape of the flow channel so that the difficulty in forming the heat exchange plate can be reduced, and the uniformity of heat exchange can be improved. The surface of the first plate is flat, thereby facilitating the arrangement of the battery cell. By providing the first protrusion, the depth of the first recess can be increased, the liquid passage area of the flow channel can be enlarged, and the influence of forming the first recess on the strength of the second plate can be reduced, thereby improving the reliability of the second plate.

In some embodiments, the top wall includes a flow channel zone and a non-flow channel zone. The flow channel is arranged in the flow channel zone. In the vertical direction, the projection of the flow channel zone is located within the projection of the protection plate.

The protection plate can protect the flow channel zone from the upper side, thereby reducing the impact force received by the flow channel zone from the upper side, reducing the deformation of the flow channel zone, improving the uniformity of heat exchange, reducing the risk of breakage of the flow channel zone, and improving the reliability of the battery.

In some embodiments, the top wall includes a flow channel zone and a non-flow channel zone. The flow channel is arranged in the flow channel zone. In the vertical direction, the flow channel zone is spaced apart from the protection plate.

When the upper side of the protection plate is subjected to pressure, the protection plate may deform downward. Spacing the flow channel zone apart from the protection plate can provide space for the deformation of the protection plate, thereby reducing the risk of direct compression of the flow channel zone by the protection plate.

In some embodiments, the top wall includes a flow channel zone and a non-flow channel zone. The flow channel is arranged in the flow channel zone. The protection plate is fixed to the non-flow channel zone; a side of the protection plate facing the top wall is provided with a second recess, and the projection of the flow channel zone in the vertical direction is located within the projection of the second recess.

By providing the second recess, clearance can be provided for the flow channel zone, the distance between the bottom surface of the second recess and the flow channel zone can be increased, and the risk of direct compression of the flow channel zone by the protection plate can be reduced.

In some embodiments, the non-flow channel zone has a first surface facing the protection plate, and at least a part of the flow channel zone protrudes from the first surface; a part of the flow channel zone protruding from the first surface is accommodated in the second recess. The second recess can provide clearance for the flow channel zone and provide space for the flow channel region, thereby improving space utilization.

In some embodiments, the protection plate is bonded to the top wall. Bonding the protection plate to the top wall can improve the connection strength between the top wall and the protection plate, thereby improving the stability of the protection plate.

In some embodiments, in the vertical direction, the projection of the top wall is located within the projection of the protection plate. The protection plate can completely cover the top wall from above, thereby protecting the top wall and reducing the impact on the top wall.

In some embodiments, the protection plate includes a base zone and a thickened zone. The thickness of the thickened zone is greater than the thickness of the base zone. By arranging the thickened zone for the protection plate, the local strength of the protection plate can be increased. For the protection plate, the position of the thickened zone can be selected according to the strength requirements. Compared with the solution in which the protection plate is thickened as a whole, the embodiments of the present application can reduce the weight of the protection plate on the premise that the strength meets the requirements.

In some embodiments, the protection plate includes a metal-plastic composite material. The metal-plastic composite material can have both the mechanical properties of metal and the heat preservation properties of plastic.

In some embodiments, the battery further includes a power distribution box. The power distribution box includes a housing body and an electric component accommodated in the housing body. The housing body is arranged on a side of the protection plate facing away from the top wall and is fixed to the protection plate, and the electric component is electrically connected to the battery cell.

Since the power distribution box is arranged on a side of the protection plate facing away from the top wall, when thermal runaway occurs in the battery cell, the protection plate and the top wall can protect the power distribution box, thereby reducing the risk of damage to the electric component caused by high-temperature substances released by the battery cell. The top wall may further exchange heat with the power distribution box through the protection plate, thereby regulating the temperature of the power distribution box. Disposing the power distribution box outside the case can further improve the utilization of the internal space of the battery.

In some embodiments, the battery cell is fixed to the top wall. The top wall can simultaneously serve to enable hanging of the battery cell and exchange heat with the battery cell. Fixing the battery cell to the top wall can also reduce the relative movement between the battery cell and the top wall when the battery is subjected to an external impact, thereby improving the stability of heat exchange between the top wall and the battery cell.

In some embodiments, the battery cell is bonded to the top wall. The bonding process is simple and exhibits high stability.

In some embodiments, a side of the battery cell distal to the top wall is provided with an electrode terminal and/or a pressure relief mechanism.

The electrode terminal is generally arranged in a protruding manner. Arranging the electrode terminal on a side of the battery cell distal to the top wall can reduce the risk of interference between the busbar component connected to the electrode terminal and the top wall, increase the heat exchange area between the battery cell and the top wall, and improve the heat exchange efficiency.

When thermal runaway occurs in the battery cell, the high-temperature and high-pressure substances discharged via the pressure relief mechanism do not directly impact the top wall, thereby reducing the risk of melting the top wall and reducing the leakage of the heat exchange medium.

In a second aspect, the embodiments of the present application provide an electric device. The electric device includes the battery according to any one of the embodiments of the first aspect. The battery is configured to provide electric energy.

In some embodiments, the electric device is a vehicle. The top wall can be embedded into the interior of the vehicle, thereby reducing the risk of external impact on the top wall.

In some embodiments, the protection plate is at least a part of the floor of the vehicle. By using the protection plate of the battery as the floor, vehicle parts can be saved, the integration level of the vehicle can be improved, and the assembly process of the vehicle can be simplified. The protection plate can withstand passenger stepping, reduce the deformation of the flow channel, and improve the uniformity of heat exchange.

In some embodiments, the vehicle includes a seat, and the seat is connected to the protection plate. The protection plate can carry the seat, which can improve the space utilization of the vehicle.

### BRIEF DESCRIPTION OF THE DRAWINGS

To more clearly illustrate the technical solutions in the embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a structural schematic view of a vehicle according to some embodiments of the present application;
FIG. 2 is an exploded schematic view of a battery according to some embodiments of the present application;
FIG. 3 is an exploded schematic view of a part of the structure shown in FIG. 2;
FIG. 4 is an exploded schematic view of a battery cell of a battery according to some embodiments of the present application;
FIG. 5 is an enlarged schematic view of the circled portion in FIG. 3;
FIG. 6 is a partial cutaway schematic view taken along the A-A direction in FIG. 5;
FIG. 7 is a schematic top view of a battery according to some embodiments of the present application;
FIG. 8 is a cutaway schematic view taken along the B-B direction in FIG. 7;
FIG. 9 is an enlarged schematic view of the circled portion in FIG. 8;
FIG. 10 is an enlarged schematic view of the boxed portion in FIG. 9;
FIG. 11 is a schematic top view of a protection plate of a battery according to some embodiments of the present application;
FIG. 12 is a cutaway schematic view taken along the C-C direction in FIG. 11;
FIG. 13 is an enlarged schematic view of the circled portion in FIG. 12;
FIG. 14 is a schematic top view of a protection plate according to some other embodiments of the present application;
FIG. 15 is a partial cross-sectional schematic view taken along the D-D direction;
FIG. 16 is a cutaway schematic view of a protection plate according to some other embodiments of the present application;
FIG. 17 is a schematic top view of a battery according to some other embodiments of the present application;
FIG. 18 is a cutaway schematic view taken along the E-E direction in FIG. 17;
FIG. 19 is an enlarged schematic view of the circled portion in FIG. 18;
FIG. 20 is an exploded schematic view of some components of the battery shown in FIG. 17; and
FIG. 21 is a schematic view of an electric device according to some other embodiments of the present application.

### Reference numerals in the drawings are explained as follows:

1. vehicle; 2. battery; 3. controller; 4. motor; 5. seat; 6. seat beam;
10. case; 10a. accommodating cavity; 10b. top wall;
11. heat exchange plate; 111. flow channel; 112. first plate; 113. second plate; 113a. first recess; 113b. first protrusion; 114. first surface; 11a. flow channel zone; 11b. non-flow channel zone; 12. frame body; 121. first beam; 122. second beam; 13. bottom plate;
20. battery cell; 21. housing; 211. battery housing body; 2111. bottom housing wall; 212. end cover; 22. electrode assembly; 23. electrode terminal; 24. pressure relief mechanism;
30. protection plate; 30a. base zone; 30b. thickened zone; 30c. metal substrate; 30d. plastic layer; 31. second recess; 32. second protrusion; 33. edge part;
40. reinforcing structure; 41. beam structure; 42. mounting plate; 421. third protrusion; 422. third recess; 43. first connecting member;
50. power distribution box; 51. housing body; 511. housing body opening; 52. electric component; 53. cover plate;
60. second connecting member;
X. first direction; Y. second direction; Z. vertical direction.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount" and "connect" shall be construed broadly and may be, for example, fixed connection, detachable connection, or integrated connection, or direct connection, indirect connection via an intermediate, or internal communication between two elements. For those of ordinary skill in the art, the specific meanings of the aforementioned terms in the present application can be understood according to specific conditions.

In the present application, the term "and/or" is only an association relationship that describes the associated objects, and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not be construed as limiting the present application in any way.

In the embodiments of the present application, "parallel" includes not only a case of being absolutely parallel, but also a case of being approximately parallel according to common knowledge in engineering. In addition, "perpendicular" includes not only a case of being absolutely perpendicular, but also a case of being approximately perpendicular according to common knowledge in engineering. Illustratively, if the included angle between two directions is 85° to 90°, it may be considered that the two directions are perpendicular; if the included angle between two directions is 0° to 5°, it may be considered that the two directions are parallel.

The term "plurality of" used in the present application refers to no less than two (including two).

The battery mentioned in the embodiments of the present application refers to a single physical module including one or a plurality of battery cells to provide higher voltage and capacity.

The battery cell may be a secondary battery cell, which refers to a battery cell that can continue to be used by activating the active material through charging after the battery cell is discharged.

The battery cell may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-hydrogen battery cell, a nickelcadmium battery cell, a lead storage battery cell, or the like.

In some embodiments, the battery further includes a case, and the battery cell is accommodated in the case. The case can protect the battery cell from the outside, thereby reducing the risk of battery cell failure.

The battery cell generates heat during charging and discharging. When a plurality of battery cells are used in groups, heat may accumulate. If the heat is not effectively removed, it may lead to an increase in the temperature of the battery cells, thereby accelerating the aging of the battery cells. In addition, excessive temperature tends to cause thermal runaway, thereby resulting in safety hazards. When the battery cell is in a low-temperature environment, the service life may be shortened, and the discharging capacity may be weakened.

In the related art, an independent heat exchange plate is generally provided inside the battery, and the heat exchange plate can exchange heat with the battery cell to control the operating temperature of the battery cell within an appropriate range. Specifically, a flow channel is generally provided inside the heat exchange plate, and when an external heat exchange medium flows through the flow channel of the heat exchange plate, the heat exchange medium exchanges heat with the battery cell through the heat exchange plate to adjust the temperature of the battery cell.

However, the independent heat exchange plate may occupy space, thereby reducing the energy density of the battery.

In some embodiments, in the battery, the case and the heat exchange plate are integrated together, and the heat exchange plate is used as a case wall of the case. In this way, components can be saved, thereby simplifying the structure of the battery and increasing energy density.

During the use of the battery, the case can withstand the external impact to protect the battery cell. However, if the heat exchange plate is arranged on the lower side of the battery cell, the risk of external impact on the heat exchange plate is high, which affects the reliability of the heat exchange plate. In view of this, in some embodiments, the heat exchange plate is generally integrated on the upper side of the battery cell to reduce the impact on the heat exchange plate applied from the lower side of the battery.

Given the varying application scenarios of different electric devices, the battery is required to be able to adapt to a wide range of harsh application scenarios when applied to different electric devices. For example, when the battery is applied to an electric vehicle, if the heat exchange plate is arranged on the upper side of the battery cell, the heat exchange plate is prone to problems such as uneven flow and liquid leakage when being stepped on by passengers, which affects the reliability of the battery cell.

In view of this, the embodiments of the present application provide a technical solution, in which a protection plate is arranged on the upper side of the case to reduce the impact force on the flow channel of the case applied from the upper side, thereby reducing the risk of case damage and liquid leakage, and improving the reliability of the battery.

The battery described in the embodiments of the present application is applicable to an electric device in which the battery is used.

The electric device may be a vehicle, a mobile phone, a portable device, a laptop computer, a ship, a spacecraft, an electric toy, an electric tool, or the like. The vehicle may be a petrol or diesel vehicle, a natural gas vehicle, or a new energy vehicle, and the new energy vehicle may be a pure electric vehicle, a hybrid electric vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric devices described above are not specially limited in the embodiments of the present application.

For ease of explanation, the following embodiments will be described by taking a vehicle as an example of the electric device.

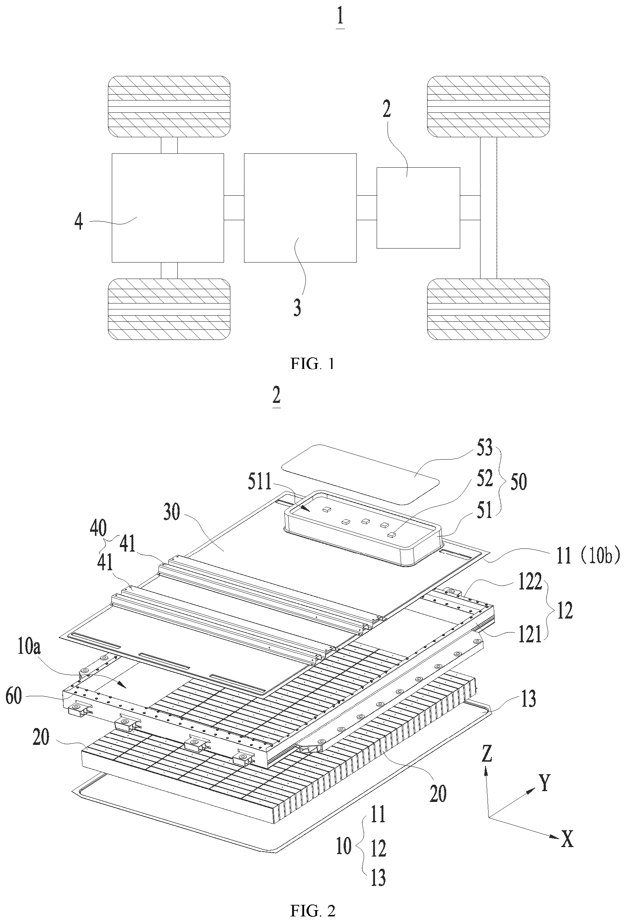

FIG. 1 is a structural schematic view of a vehicle according to some embodiments of the present application.

As shown in FIG. 1, a battery 2 is provided inside a vehicle 1, and the battery 2 may be provided at the bottom, the head, or the tail of the vehicle 1. The battery 2 may be configured to power the vehicle 1. For example, the battery 2 may serve as an operation power source of the vehicle 1.

The vehicle 1 may further include a controller 3 and a motor 4. The controller 3 is configured to control the battery 2 to power the motor 4, e.g., for operation power needed by the vehicle 1 for start-up, navigation, and driving.

In some embodiments of the present application, the battery 2 may not only serve as the operation power source for the vehicle 1, but also as a driving power source for the vehicle 1 to, instead of or in part instead of fuel or natural gas, provide driving power for the vehicle 1.

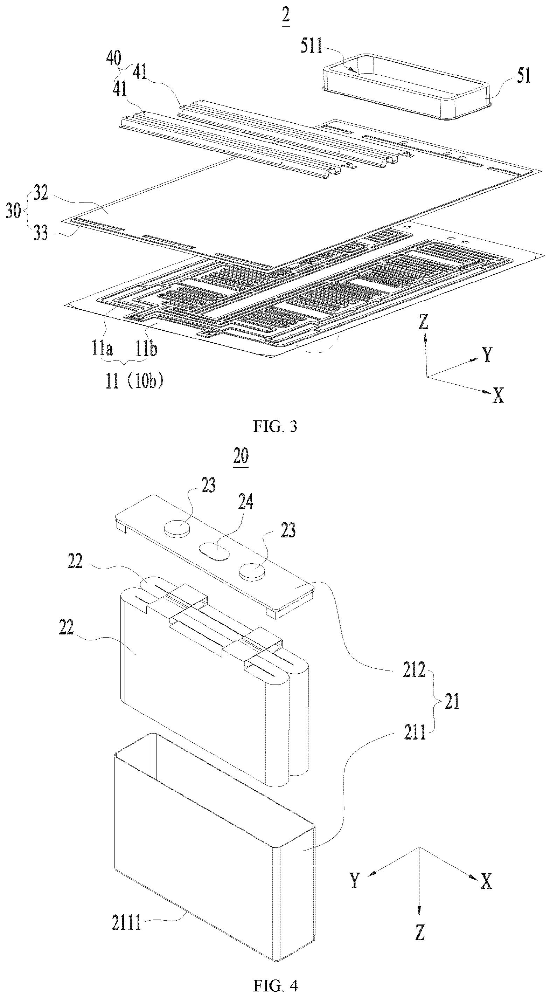

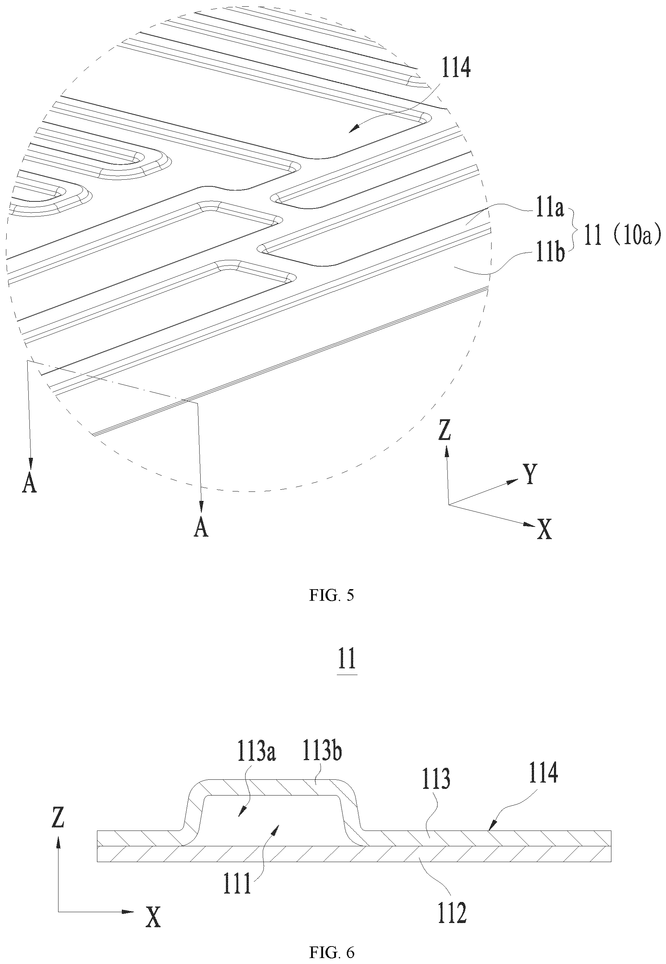

FIG. 2 is an exploded schematic view of a battery according to some embodiments of the present application; FIG. 3 is an exploded schematic view of a part of the structure shown in FIG. 2; FIG. 4 is an exploded schematic view of a battery cell of a battery according to some embodiments of the present application; FIG. 5 is an enlarged schematic view of the circled portion in FIG. 3; FIG. 6 is a partial cutaway schematic view taken along the A-A direction in FIG. 5.

Referring to FIGs. 2-6, the embodiments of the present application provide a battery 2. The battery includes a case 10 and a battery cell 20. The case 10 is provided with an accommodating cavity 10a, and the battery cell 20 is accommodated in the accommodating cavity 10a.

In the battery 2, one or a plurality of battery cells 20 may be provided. If a plurality of battery cells 20 are provided, the plurality of battery cells 20 may be connected in series, in parallel, or in series-parallel. The series-parallel connection means that both series connection and parallel connection are present in the connection of the plurality of battery cells 20.

The plurality of battery cells 20 may be directly connected in series, in parallel, or in series-parallel, and then the whole formed by the plurality of battery cells 20 is accommodated in the accommodating cavity 10a. Certainly, the situation may be that the plurality of battery cells 20 are first connected in series, in parallel, or in series-parallel to form battery modules, and then the plurality of battery modules are connected in series, in parallel, or in series-parallel to form a whole and accommodated in the accommodating cavity 10a.

As an example, the battery cell 20 may be a prismatic battery cell, a pouch battery cell, or a battery cell of other shapes. The prismatic battery cell includes a square-housing battery cell, a blade-shaped battery cell, and a multi-prismatic battery cell, and the multi-prismatic battery cell is, e.g., a hexagonal prismatic battery cell.

The case 10 may be in various shapes, such as a cylinder, a rectangular parallelepiped, and the like.

The case 10 may be made of steel, aluminum, aluminum alloy, or other materials.

In some embodiments, the battery cell 20 includes a housing 21 and an electrode assembly 22. The electrode assembly 22 is accommodated in the housing 21.

The electrode assembly 22 is a component where the electrochemical reaction occurs in the battery cell 20. One or more electrode assemblies 22 may be accommodated in the housing 21.

As an example, the electrode assembly 22 includes a positive electrode plate and a negative electrode plate. The portions of the positive electrode plate and the negative electrode plate that contain the active substance constitute the main body part of the electrode assembly 22, and the portions of the positive electrode plate and the negative electrode plate that do not contain the active substance each constitute a tab. The tab may include a positive electrode tab and a negative electrode tab. The positive electrode tab and the negative electrode tab may be located together at an end of the main body part or respectively at two ends of the main body part.

During charging and discharging of the battery cell 20, the positive electrode active substance and the negative electrode active substance react with the electrolyte, and the tabs are connected to the electrode terminals to form a current circuit.

The housing 21 is of a hollow structure. An accommodating space for accommodating the electrode assembly 22 and the electrolyte is formed inside the housing. The shape of the housing 21 may be determined according to the specific shape of the electrode assembly 22. For example, if the electrode assembly 22 is of a rectangular parallelepiped structure, a rectangular parallelepiped housing may be used; if the electrode assembly 22 is of a cylinder structure, a cylinder housing may be used.

As an example, the housing 21 includes a battery housing body 211 and an end cover 212. The battery housing body 211 is provided with an opening, and the end cover 212 is configured to lid the opening. The end cover 212 is connected to the battery housing body 211 by means of welding, bonding, snap-fit connection, or other manners.

The battery housing body 211 may be open at an end or open at both ends. In some examples, the battery housing body 211 may be of a structure that is open at one side, one end cover 212 is provided, and the end cover lids the battery housing body 211. In other examples, the battery housing body 211 may also be of a structure that is open at both sides, two end covers 212 are provided, and the two end covers 212 lid the two openings of the battery housing body 211, respectively.

In some embodiments, the battery cell 20 further includes an electrode terminal 23. The electrode terminal 23 may be configured to be electrically connected to the electrode assembly 22 to output or input the electric energy of the battery cell 20.

In some embodiments, the electrode terminal 23 is arranged on the battery housing body 211 or the end cover 212.

In some embodiments, two electrode terminals 23 are provided, and the two electrode terminals 23 are electrically connected to the tab of the positive electrode plate and the tab of the negative electrode plate, respectively. The current generated by the electrode assembly 22 can be transmitted to the outside through the electrode terminals 23, and an external power supply can also charge the electrode assembly 22 through the electrode terminals 23.

In some embodiments, the battery cell 20 further includes a pressure relief mechanism 24.

In the case of a short circuit, overcharging, or the like, thermal runaway may occur within the battery cell 20, resulting in a rapid increase in internal pressure of the housing 21, thereby posing a risk of rupture of the battery cell 20.

The pressure relief mechanism 24 may enable the internal and external spaces of housing 21 to be in communication with each other when the internal pressure or temperature of the housing 21 reaches a threshold, thereby relieving the internal pressure of the battery cell 20 and reducing the risk of rupture of the battery cell 20.

The pressure relief mechanism 24 refers to an element or a component that is actuated to relieve the internal pressure or reduce the internal temperature of the battery cell 20 when the internal pressure or temperature reaches a preset threshold. The designed threshold varies according to different design requirements. The threshold may depend on the material of one or more of the positive electrode plate, the negative electrode plate, the electrolyte, and the separator in the battery cell 20. The pressure relief mechanism 24 may take the form of an anti-explosion valve, a gas valve, a pressure relief valve, a safety valve, or the like, and may specifically adopt a pressure-sensitive or temperature-sensitive element or configuration.

In some embodiments, the pressure relief mechanism 24 may be arranged on the battery housing body 211, or may be arranged on the end cover 212.

In some embodiments, the case 10 includes a top wall 10b. The top wall 10b is located on the upper side of the accommodating cavity 10a in the vertical direction Z, and the top wall 10b is internally provided with a flow channel 111 for a heat exchange medium to flow. Illustratively, the top wall 10b is at least configured to exchange heat with the battery cell 20.

As an example, when the battery 2 is mounted in the electric device, the top wall 10b is located on the upper side of the accommodating cavity 10a in the vertical direction Z. During processes such as production and transportation of the battery 2, the top wall 10b is not required to be located on the upper side of the accommodating cavity 10a in the vertical direction Z.

As an example, the heat exchange medium may be liquid or gas, such as water.

The top wall 10b may be an integrally formed component, or may be formed by connecting a plurality of independently formed components.

The battery cell 20 may be fixed to the top wall 10b of the case 10, or may be fixed to the bottom wall of the case 10, or may be fixed to other positions of the case 10.

As an example, the electrode terminals 23 of the battery cell 20 may face the top wall 10b, or may face the bottom wall, or may face the side wall of the case 10.

As an example, the pressure relief mechanism 24 of the battery cell 20 may face the top wall 10b, or may face the bottom wall, or may face the side wall of the case 10.

The flow channel 111 is formed in the top wall 10b of the case 10. When the lower side of the case 10 is subjected to an external impact, the impact force received by the flow channel 111 is small, thereby reducing the deformation of the flow channel 111, improving the uniformity of heat exchange, reducing the risk of leakage of the heat exchange medium, and improving the reliability of the battery 2.

In some embodiments, the battery 2 includes a protection plate 30. The protection plate 30 is arranged on a side of the top wall 10b distal to the battery cell 20 and is connected to the top wall 10b.

The protection plate 30 may be connected to the top wall 10b by means of bonding, fastener-based connection, welding, snap-fit connection, or other manners.

In the vertical direction Z, the protection plate 30 may cover a part of the top wall 10b from the upper side, or may completely cover the top wall 10b.

The protection plate 30 may be a plate with an equal thickness, or may be a plate with different thicknesses.

The material of the protection plate 30 may be metal, plastic, a metal-plastic composite material, or the like. Optionally, the metal may be aluminum, aluminum alloy, stainless steel, nickel-plated steel, or the like.

The protection plate 30 may be an integrally formed plate, or may be formed by splicing a plurality of plates.

In the embodiments of the present application, the protection plate 30 can protect the top wall 10b from the upper side, so as to reduce the impact force on the top wall 10b applied from the upper side, thereby reducing the deformation of the top wall 10b, improving the uniformity of heat exchange, reducing the risk of leakage of the heat exchange medium, and improving the reliability of the battery 2.

In some embodiments, the battery 2 further includes a reinforcing structure 40. The reinforcing structure 40 is arranged on a side of the protection plate 30 facing away from the top wall 10b and is fixed to the protection plate 30.

The reinforcing structure 40 and the protection plate 30 may be independently formed components, and the two may be fixedly connected by welding, bonding, fastener-based connection, or other manners. Alternatively, the reinforcing structure 40 and the protection plate 30 may also be integrally formed.

The reinforcing structure 40 may be a plate structure, a beam structure, a reinforcing rib structure, a boss structure, or other structures, as long as it can reinforce the local strength of the protection plate 30.

One or a plurality of reinforcing structures 40 may be provided.

When the battery 2 is mounted in the electric device, the reinforcing structure 40 may be connected to other components of the electric device, or may not be connected to other components of the electric device.

The reinforcing structure 40 can improve the overall strength of the battery 2. It can reduce the deformation of the protection plate 30 and reduce the risk of compression of the top wall 10b by the protection plate 30 when the protection plate 30 is subjected to an external impact, thereby improving the reliability of the battery 2.

In some embodiments, the reinforcing structure 40 is configured to be connected to an external component.

Illustratively, when the battery 2 is applied to a vehicle, the reinforcing structure 40 may be configured to be connected to a seat 5 of the vehicle.

The reinforcing structure 40 of the battery 2 can provide mounting points for some components of the electric device, thereby reducing the number of parts, improving the integration level, and simplifying the assembly process.

In some embodiments, the reinforcing structure 40 includes a beam structure 41. The beam structure 41 possesses high strength and thus can reduce the deformation of the protection plate 30 when the protection plate 30 is subjected to an external impact.

Illustratively, the beam structure 41 may serve as a seat beam of the vehicle for mounting the seat 5.

In some embodiments, the beam structure 41 is connected to the protection plate 30 by bonding or welding.

In some embodiments, the beam structure 41 extends in a first direction X. Illustratively, the first direction X is perpendicular to the vertical direction Z.

In some embodiments, the beam structure 41 is formed by bending a metal sheet.

In some embodiments, the reinforcing structure 40 includes a plurality of beam structures 41. The plurality of beam structures 41 are spaced apart from each other in a second direction Y. Optionally, the first direction X, the second direction Y, and the vertical direction Z are perpendicular to each other.

In some embodiments, the thickness of the protection plate 30 may be 0.1 mm to 50 mm. Optionally, the thickness of the protection plate 30 is 0.4 mm to 5 mm.

As an example, the thickness of the protection plate 30 may be 0.1 mm, 0.2 mm, 0.4 mm, 0.8 mm, 1 mm, 1.5 mm, 2 mm, 3 mm, 4 mm, 5 mm, 8 mm, 10 mm, 15 mm, 20 mm, 35 mm, 40 mm, 45 mm, or 50 mm.

In the embodiments of the present application, the thickness of the protection plate 30 is limited to be greater than or equal to 0.1 mm, so as to increase the structural strength of the protection plate 30 and reduce the deformation of the protection plate 30 when being stepped on. In the embodiments of the present application, the thickness of the protection plate 30 is limited to be less than or equal to 50 mm, so as to reduce the weight and volume of the protection plate 30 and reduce the loss of energy density of the battery 2.

In some embodiments, the protection plate 30 is bonded to the top wall 10b. Bonding the protection plate 30 to the top wall 10b can improve the connection strength between the top wall 10b and the protection plate 30, thereby improving the stability of the protection plate 30.

In some embodiments, the protection plate 30 is bonded to the top wall 10b by a structural adhesive.

In some embodiments, the protection plate 30 and the top wall 10b are further connected by other components, such as fasteners.

In some embodiments, the battery 2 further includes a power distribution box 50. The power distribution box 50 includes a housing body 51 and an electric component 52 accommodated in the housing body 51. The housing body 51 is arranged on a side of the protection plate 30 facing away from the top wall 10b and is fixed to the protection plate 30. The electric component 52 is electrically connected to the battery cell 20.

The power distribution box 50 controls the battery 2. As an example, the power distribution box 50 protects the battery 2 and transmits and distributes power during charging and discharging of the battery 2.

Since the power distribution box 50 is arranged on a side of the protection plate 30 facing away from the top wall 10b, when thermal runaway occurs in the battery cell 20, the protection plate 30 and the top wall 10b can protect the power distribution box 50, thereby reducing the risk of damage to the electric component 52 caused by high-temperature substances released by the battery cell 20. The top wall 10b may further exchange heat with the power distribution box 50 through the protection plate 30, thereby regulating the temperature of the power distribution box 50. Disposing the power distribution box 50 outside the case 10 can further improve the utilization of the internal space of the battery 2.

Generally, the battery 2 has high voltage. If electric components (for example, a motor controller, an air conditioning system, and a charging system) of the electric device are directly connected to the battery 2, the wire harness of the battery 2 may become disordered. Therefore, the power distribution box 50 is required to be added to the battery 2 to distribute the high voltage of the battery 2. The power distribution box 50 adopts a centralized power distribution solution, featuring a compact structural design, convenient wiring layout, and quick and easy maintenance. According to the system architecture requirements of different customers, the power distribution box 50 further needs to integrate part of the intelligent control management units of the battery management system, thereby further simplifying the complexity of power distribution of the entire electric device.

In some embodiments, the electric component 52 includes one or more of a fuse, a relay, a resistor, a current sensor, and a battery management assembly to facilitate control of the battery 2.

A fuse is an electric component that disconnects the circuit by fusion of its fusible element with the heat generated by itself when the current exceeds a specified value. A relay is an electrical control component, and is an electric component that makes a controlled quantity undergo a preset step change in an electrical output circuit when the change in an input quantity (excitation quantity) meets specified requirements. A current sensor is a detection apparatus that can sense information about a measured current and can convert, according to a specific rule, the measured and sensed information into an electric signal that meets a specific standard requirement or information in another required form for outputting, so as to meet requirements of information transmission, processing, storage, display, recording, and control, etc. The battery management assembly is configured to intelligently manage and maintain each battery cell 20, reduce the risk of overcharging and overdischarging of the battery 2, extend the service life of the battery 2, and monitor the status of the battery 2.

Illustratively, the battery management assembly includes a circuit board.

In some embodiments, the power distribution box 50 is located directly below or behind the rear seat of the vehicle. By arranging the power distribution box 50 below or behind the rear seat of the vehicle, the space of the vehicle can be greatly utilized.

In some embodiments, the housing body 51 of the power distribution box 50 is fixed to the protection plate 30 by welding.

In some embodiments, an end of the housing body 51 distal to the protection plate 30 is provided with a housing body opening 511; the power distribution box 50 further includes a cover plate 53, and the cover plate 53 is connected to the housing body 51 and lids the housing body opening 511.

The cover plate 53 can seal the housing body 51 to prevent external impurities from entering the housing body 51, thereby reducing the risk of corrosion and damage to the electric component 52 caused by the external impurities.

In some embodiments, the cover plate 53 is detachably connected to the housing body 51. When the electric component 52 fails, the cover plate 53 can be removed to facilitate the maintenance of the electric component 52.

In some embodiments, the battery cell 20 is fixed to the top wall 10b. The top wall 10b can simultaneously serve to enable hanging of the battery cell 20 and exchange heat with the battery cell 20. Fixing the battery cell 20 to the top wall 10b can also reduce the relative movement between the battery cell 20 and the top wall 10b when the battery 2 is subjected to an external impact, thereby improving the stability of heat exchange between the top wall 10b and the battery cell 20.

In some embodiments, the battery cell 20 is bonded to the top wall 10b. The bonding process is simple and exhibits high stability.

In some embodiments, the battery cell 20 is bonded to the top wall 10b by a thermally conductive adhesive. The thermally conductive adhesive has low thermal resistance. Bonding the battery cell 20 and the top wall 10b with the thermally conductive adhesive can improve the heat exchange efficiency between the top wall 10b and the battery cell 20.

In some embodiments, a side of the battery cell 20 distal to the top wall 10b is provided with electrode terminals 23.

The electrode terminals 23 are generally arranged to protrude from the housing 21. Arranging the electrode terminals 23 on a side of the battery cell 20 distal to the top wall 10b can reduce the risk of interference between the busbar components connected to the electrode terminals 23 and the top wall 10b, increase the heat exchange area between the battery cell 20 and the top wall 10b, and improve the heat exchange efficiency.

In some embodiments, two electrode terminals 23 are both arranged on a side of the battery cell 20 distal to the top wall 10b.

In some embodiments, the battery housing body 211 includes a bottom housing wall 2111 opposite to the end cover 212. The bottom housing wall 2111 is bonded to the top wall 10b. The two electrode terminals 23 are mounted on the end cover 212.

In some embodiments, a side of the battery cell 20 distal to the top wall 10b is provided with a pressure relief mechanism 24. When thermal runaway occurs in the battery cell 20, the high-temperature and high-pressure substances discharged via the pressure relief mechanism 24 do not directly impact the top wall 10b, thereby reducing the risk of melting the top wall 10b and reducing the leakage of the heat exchange medium.

In some embodiments, the electrode terminals 23 and the pressure relief mechanism 24 are all arranged on the side of the battery cell 20 distal to the top wall 10b.

In some embodiments, the case 10 includes a frame body 12, a heat exchange plate 11, and a bottom plate 13. The heat exchange plate 11 and the bottom plate 13 are located on the upper side and the lower side of the frame body 12 in the vertical direction Z, respectively. The frame body 12, the heat exchange plate 11, and the bottom plate 13 define the accommodating cavity 10a. The top wall 10b includes the heat exchange plate 11. The heat exchange plate 11 is configured to exchange heat with the battery cell 20.

Integrating the heat exchange plate 11 into the case 10 can reduce the number of parts of the battery 2, improve the integration level of the battery 2, and increase the energy density of the battery 2.

In some embodiments, the battery cell 20 is fixed to the heat exchange plate 11. The bottom plate 13 does not need to carry the battery cell 20. In this way, the strength requirements for the bottom plate 13 can be lowered, thereby reducing the thickness and weight of the bottom plate 13 and increasing the energy density of the battery 2.

In some embodiments, the frame body 12 includes two first beams 121 and two second beams 122. The two first beams 121 are oppositely arranged in the first direction X, and the two second beams 122 are oppositely arranged in the second direction Y. The first beam 121 extends in the second direction Y, and two ends of the first beam 121 are connected to the two second beams 122, respectively.

In some embodiments, the battery 2 further includes a second connecting member 60. The second connecting member 60 connects the protection plate 30, the heat exchange plate 11, and the frame body 12.

The second connecting member 60 fixes both the protection plate 30 and the heat exchange plate 11 to the frame body 12, which can improve the stability of the protection plate 30 and the heat exchange plate 11.

In some embodiments, the second connecting member 60 passes through the protection plate 30 and the heat exchange plate 11 in the vertical direction Z and is fixed to the frame body 12.

In some embodiments, a plurality of second connecting members 60 are provided. The plurality of second connecting members 60 are spaced apart from each other in a circumferential direction of the frame body 12.

In some embodiments, the second connecting member 60 may include a flow drill screw (FDS), a bolt, or other fasteners.

In some embodiments, the heat exchange plate 11 includes a first plate 112 and a second plate 113 stacked in the vertical direction Z. The first plate 112 is located on the lower side of the second plate 113 in the vertical direction Z, the first plate 112 is connected to the battery cell 20, and the second plate 113 is connected to the protection plate 30. The flow channel 111 is formed between the first plate 112 and the second plate 113.

The first plate 112 and the second plate 113 may be independently formed, which enables flexible configuration of the shape of the flow channel 111 so that the difficulty in forming the heat exchange plate 11 can be reduced, and the uniformity of heat exchange can be improved.

In some embodiments, the first plate 112 and the second plate 113 are welded. The weld seam between the first plate 112 and the second plate 113 extends around the entire perimeter to improve the sealing performance.

In some embodiments, the first plate 112 is a flat plate. The surface of the first plate 112 is flat, thereby facilitating the arrangement of the battery cells 20.

In some embodiments, a side of the second plate 113 facing the first plate 112 is provided with a first recess 113a. The first plate 112 covers the first recess 113a and forms the flow channel 111.

In some embodiments, a first protrusion 113b is formed on the second plate 113 at a position corresponding to the first recess 113a. The first protrusion 113b protrudes toward a side distal to the first plate 112. By providing the first protrusion 113b, the depth of the first recess 113a can be increased, the liquid passage area of the flow channel 111 can be enlarged, and the influence of forming the first recess 113a on the strength of the second plate 113 can be reduced, thereby improving the reliability of the second plate 113.

In some embodiments, the shape of the first protrusion 113b corresponds to the shape of the first recess 113a.

In some embodiments, the first protrusion 113b and the first recess 113a may be formed by stamping the second plate 113.

In some embodiments, the heat exchange plate 11 further includes a flow inlet and a flow outlet (not shown), and the flow channel 111 is in communication with the flow inlet and the flow outlet. The heat exchange medium can flow into the flow channel 111 via the flow inlet and flow out the flow channel via the flow outlet.

In some embodiments, the flow inlet may be arranged on the first plate 112, or may be arranged on the second plate 113. The flow outlet may be arranged on the first plate 112, or may be arranged on the second plate 113.

In some embodiments, the second connecting member 60 passes through the first plate 112 and the second plate 113.

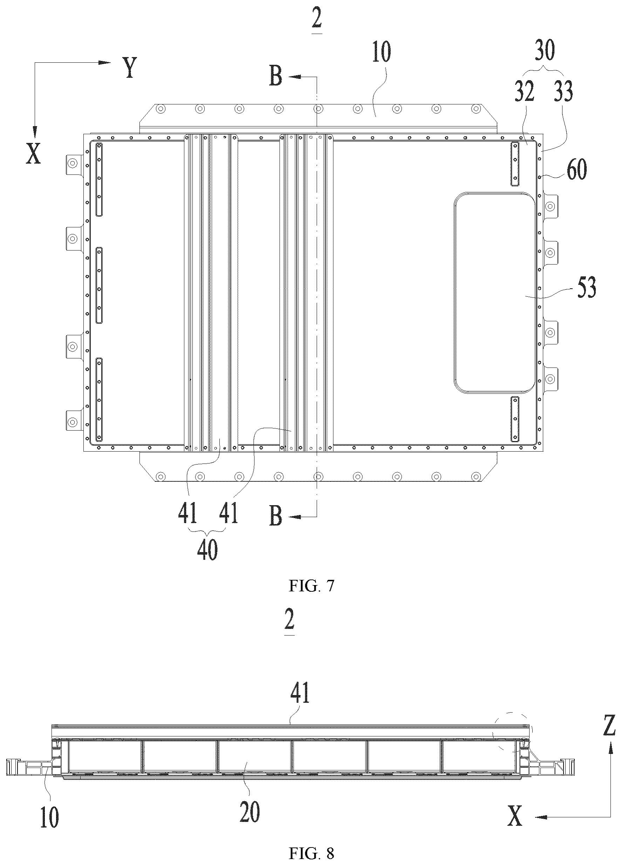

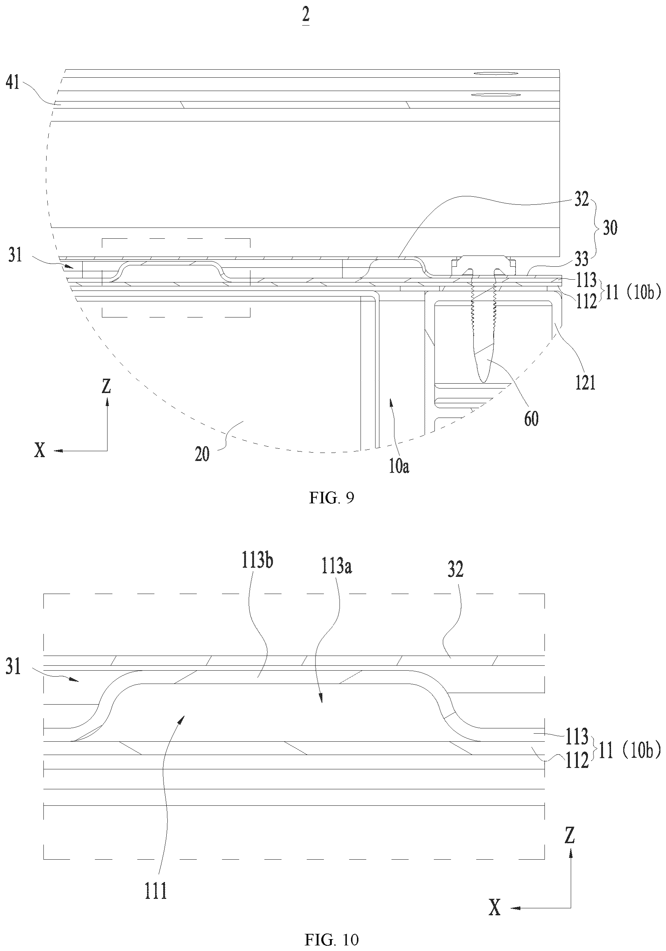

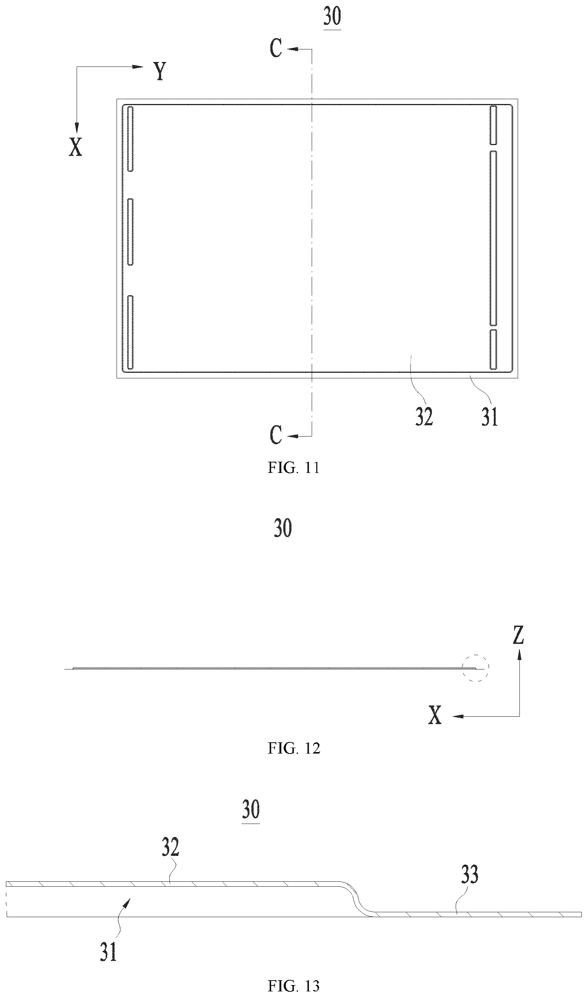

FIG. 7 is a schematic top view of a battery according to some embodiments of the present application; FIG. 8 is a cutaway schematic view taken along the B-B direction in FIG. 7; FIG. 9 is an enlarged schematic view of the circled portion in FIG. 8; FIG. 10 is an enlarged schematic view of the boxed portion in FIG. 9; FIG. 11 is a schematic top view of a protection plate of a battery according to some embodiments of the present application; FIG. 12 is a cutaway schematic view taken along the C-C direction in FIG. 11; FIG. 13 is an enlarged schematic view of the circled portion in FIG. 12.

Referring to FIGs. 5-12 together, in some embodiments, the top wall 10b includes a flow channel zone 11a and a non-flow channel zone 11b, and the flow channel 111 is arranged in the flow channel zone 11a.

Illustratively, the flow channel zone 11a is a solid zone where the top wall 10b overlaps with the flow channel 111 in the vertical direction Z, and the non-flow channel zone 11b is a solid zone where the top wall 10b does not overlap with the flow channel 111 in the vertical direction Z.

In some embodiments, the non-flow channel zone 11b includes a portion where the first plate 112 and the second plate 113 are attached to each other. The flow channel zone 11a includes the first protrusion 113b of the second plate 113 and a portion of the first plate 112 corresponding to the first protrusion 113b in the vertical direction Z.

In some embodiments, in the vertical direction Z, the projection of the flow channel zone 11a is located within the projection of the protection plate 30.

The protection plate 30 can protect the flow channel zone 11a from the upper side, thereby reducing the impact force received by the flow channel zone 11a from the upper side, reducing the deformation of the flow channel zone 11a, improving the uniformity of heat exchange, reducing the risk of breakage of the flow channel zone 11a, and improving the reliability of the battery 2.

In some embodiments, in the vertical direction Z, the flow channel zone 11a is spaced apart from the protection plate 30.

When the upper side of the protection plate 30 is subjected to pressure, the protection plate 30 may deform downward. Spacing the flow channel zone 11a apart from the protection plate 30 can provide space for the deformation of the protection plate 30, thereby reducing the risk of direct compression of the flow channel zone 11a by the protection plate 30.

In some embodiments, the protection plate 30 is fixed to the non-flow channel zone 11b.

Illustratively, the protection plate 30 is fixed to the non-flow channel zone 11b by means of bonding, welding, fastener-based connection, or other manners.

The non-flow channel zone 11b is not provided with the flow channel 111, and by fixing the protection plate 30 to the non-flow channel zone 11b, when the protection plate 30 is subjected to an impact, the acting force transmitted to the flow channel zone 11a can be reduced and the deformation of the flow channel 111 can thus be reduced.

In some embodiments, a side of the protection plate 30 facing the top wall 10b is provided with a second recess 31. The projection of the flow channel zone 11a in the vertical direction Z is located within the projection of the second recess 31.

Illustratively, in the vertical direction Z, the flow channel zone 11a may protrude upward from the non-flow channel zone 11b, or may protrude downward from the non-flow channel zone 11b.

By providing the second recess 31, clearance can be provided for the flow channel zone 11a, the distance between the bottom surface of the second recess 31 and the flow channel zone 11a can be increased, and the risk of direct compression of the flow channel zone 11a by the protection plate 30 can be reduced.

In some embodiments, the protection plate 30 includes an edge part 33 arranged around the second recess 31 and a second protrusion 32. The position of the second protrusion 32 corresponds to the position of the second recess 31, and the second protrusion 32 protrudes from a side of the edge part 33 distal to the top wall 10b. By providing the second protrusion 32, the depth of the second recess 31 can be increased, and the strength of the protection plate 30 can be improved.

In some embodiments, the edge part 33 abuts against the non-flow channel zone 11b and is fixed to the non-flow channel zone 11b.

In some embodiments, the second connecting member 60 connects the edge part 33, the non-flow channel zone 11b, and the frame body 12.

In some embodiments, the non-flow channel zone 11b has a first surface 114 facing the protection plate 30, and at least a part of the flow channel zone 11a protrudes from the first surface 114.

Illustratively, the first protrusion 113b of the second plate 113 protrudes from the first surface 114.

In some embodiments, a part of the flow channel zone 11a protruding from the first surface 114 is accommodated in the second recess 31. The second recess 31 can provide clearance for the flow channel zone 11a and provide space for the flow channel region 11a, thereby improving space utilization.

In some embodiments, a structural adhesive is arranged in the second recess 31. The structural adhesive bonds the flow channel zone 11a to the protection plate 30. By allowing the structural adhesive to bond the flow channel zone 11a to the protection plate 30, the connection strength between the flow channel zone 11a and the protection plate 30 can be increased, and the stability of the battery 2 can be improved.

The second recess 31 can limit the structural adhesive and reduce the overflow of the structural adhesive.

Since the structural adhesive is soft, when the protection plate 30 is subjected to pressure, the structural adhesive may deform to provide space for the deformation of the protection plate 30, thereby reducing the acting force transmitted to the flow channel zone 11a.

In some embodiments, in the vertical direction Z, the projection of the top wall 10b is located within the projection of the protection plate 30. The protection plate 30 can completely cover the top wall 10b from above, thereby protecting the top wall 10b and reducing the impact on the top wall 10b.

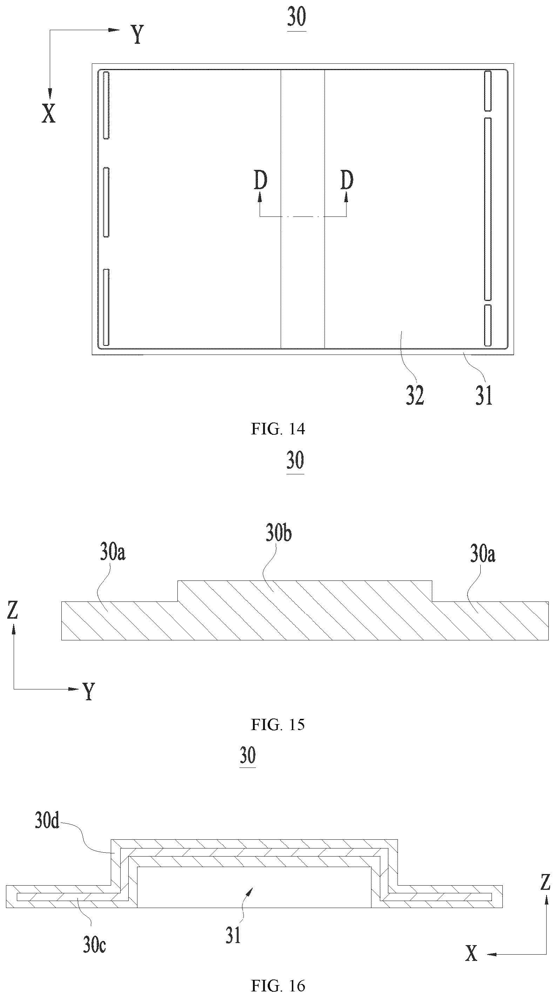

FIG. 14 is a schematic top view of a protection plate according to some other embodiments of the present application; FIG. 15 is a partial cross-sectional schematic view taken along the D-D direction.

Referring to FIGs. 14 and 15, in some embodiments, the protection plate 30 includes a base zone 30a and a thickened zone 30b. The thickness of the thickened zone 30b is greater than the thickness of the base zone 30a.

By arranging the thickened zone 30b for the protection plate 30, the local strength of the protection plate 30 can be increased. For the protection plate 30, the position of the thickened zone 30b can be selected according to the strength requirements. Compared with the solution in which the protection plate 30 is thickened as a whole, the embodiments of the present application can reduce the weight of the protection plate 30 on the premise that the strength meets the requirements.

One or a plurality of thickened zones 30b may be provided.

In some embodiments, the seat beam may be mounted on the thickened zone 30b.

In some embodiments, the second connecting member 60 connects the thickened zone 30b and the top wall 10b.

In some embodiments, the protection plate 30 is an integrally formed structure.

In some embodiments, the base zone 30a and the thickened zone 30b are independently formed plates, and the two are integrally connected by welding.

In some embodiments, the protection plate 30 includes a substrate and a thickened plate stacked in the vertical direction Z, and the area of the thickened plate is smaller than the area of the substrate. The thickened zone 30b includes a thickened plate and a portion of the substrate that overlaps with the thickened plate, and the base zone 30a includes a portion of the substrate that does not overlap with the thickened plate.

FIG. 16 is a cutaway schematic view of a protection plate according to some other embodiments of the present application.

Referring to FIG. 16, in some embodiments, the protection plate 30 includes a metal-plastic composite material. The metal-plastic composite material can have both the mechanical properties of metal and the heat preservation properties of plastic.

In some embodiments, the protection plate 30 includes a metal substrate 30c and a plastic layer 30d wrapping the surface of the metal substrate 30c. The plastic layer 30d has excellent wear resistance, which can slow down the wear of the protection plate 30.

In some embodiments, the metal substrate 30c may be a steel plate.

In some embodiments, the plastic layer 30d is made of insulating plastic.

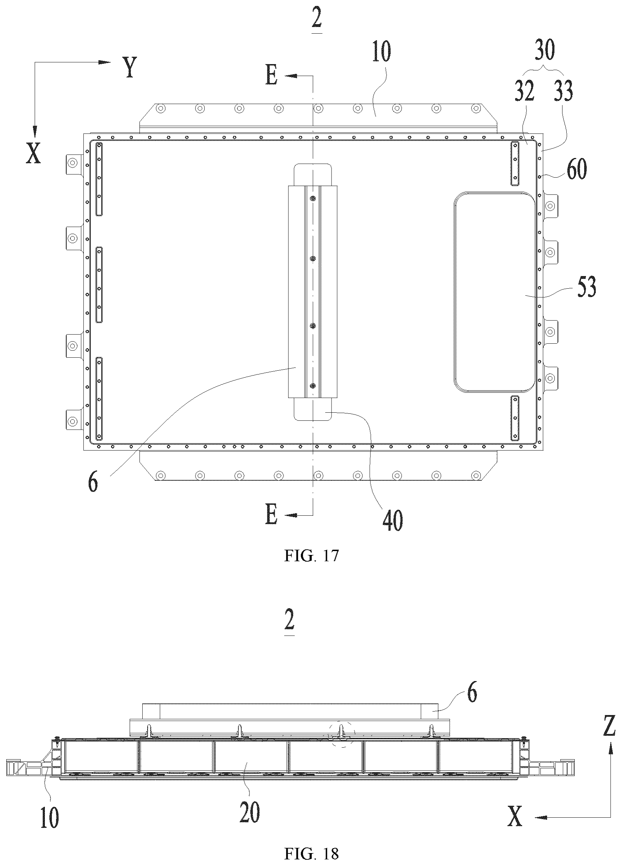

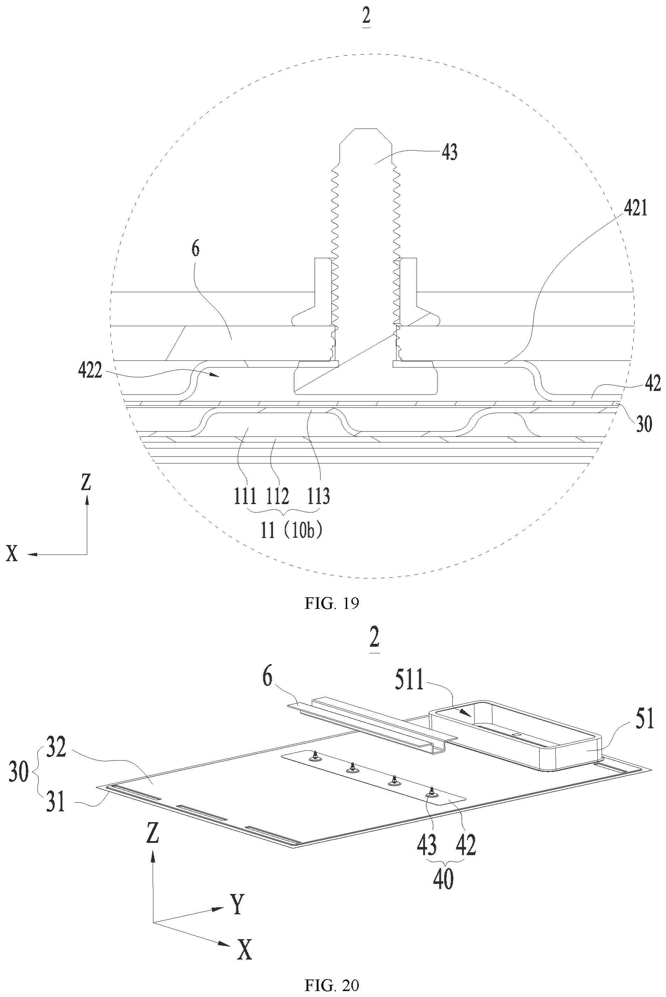

FIG. 17 is a schematic top view of a battery according to some other embodiments of the present application; FIG. 18 is a cutaway schematic view taken along the E-E direction in FIG. 17; FIG. 19 is an enlarged schematic view of the circled portion in FIG. 18; FIG. 20 is an exploded schematic view of some components of the battery shown in FIG. 17.

Referring to FIGs. 17-20, in some embodiments, the reinforcing structure 40 includes a mounting plate 42 and a first connecting member 43 fixed to the mounting plate 42. The mounting plate 42 is fixed to the protection plate 30, and the first connecting member 43 is configured to be connected to the external component.

One or a plurality of first connecting members 43 may be provided.

The first connecting member 43 can provide mounting points for some components of the electric device, thereby reducing the number of parts, improving the integration level, and simplifying the assembly process.

Illustratively, when the battery 2 is applied to a vehicle, the first connecting member 43 may be configured to be connected to a seat beam 6 of the vehicle.

In some embodiments, a plurality of first connecting members 43 are provided. Optionally, the plurality of first connecting members 43 are arranged in the first direction X.

In some embodiments, the first connecting member 43 includes a rivet bolt.

In some embodiments, the mounting plate 42 includes a third protrusion 421 protruding toward a side distal to the protection plate 30, and a third recess 422 is formed on the inner side of the third protrusion 421. A part of the first connecting member 43 is accommodated in the third recess 422, and the first connecting member 43 passes through the third protrusion 421 and is fixed to the third protrusion 421.

In some embodiments, the seat beam 6 abuts against the third protrusion 421 and is fixed to the third protrusion 421.

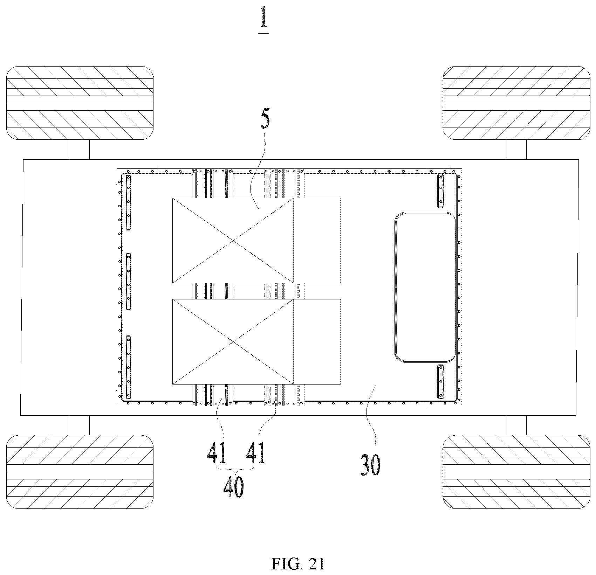

FIG. 21 is a schematic view of an electric device according to some other embodiments of the present application.

Referring to FIG. 21, the present application further provides an electric device, which includes the battery 2 according to any one of the above embodiments. The battery 2 is used to provide electric energy for the electric device. The electric device may be any one of the aforementioned devices or systems that use the battery 2.

In some embodiments, the electric device is a vehicle. The top wall 10b can be embedded into the interior of the vehicle, thereby reducing the risk of external impact on the top wall 10b.

In some embodiments, the protection plate 30 is at least a part of the floor of the vehicle. By using the protection plate 30 of the battery 2 as the floor, vehicle parts can be saved, the integration level of the vehicle can be improved, and the assembly process of the vehicle can be simplified. The protection plate 30 can withstand passenger stepping, reduce the deformation of the flow channel 111, and improve the uniformity of heat exchange.

In some embodiments, the vehicle includes a seat 5, and the seat 5 is connected to the protection plate 30. The protection plate 30 can carry the seat 5, thereby improving the space utilization of the vehicle.

In some embodiments, the seat 5 is mounted on the beam structure of the reinforcing structure 40.

In some other embodiments, the vehicle further includes a seat beam 6. The seat beam 6 is fixed to the first connecting member 43. The seat 5 is mounted on the seat beam. The protection plate 30 is hung on the seat beam 6 through the first connecting member 43.

Referring to FIGs. 2-6, the embodiments of the present application provide a battery 2. The battery includes a case 10, a battery cell 20, a protection plate 30, a reinforcing structure 40, and a power distribution box 50.

The case 10 includes a frame body 12, a heat exchange plate 11, and a bottom plate 13. The heat exchange plate 11 and the bottom plate 13 are located on the upper side and the lower side of the frame body 12 in the vertical direction Z, respectively. The frame body 12, the heat exchange plate 11, and the bottom plate 13 define an accommodating cavity 10a. The battery cell 20 is accommodated in the accommodating cavity 10a and bonded to the heat exchange plate 11. The heat exchange plate 11 is internally provided with a flow channel 111 for a heat exchange medium to flow and is configured for heat exchange of the battery cell 20. A side of the battery cell 20 distal to the heat exchange plate 11 is provided with electrode terminals 23 and a pressure relief mechanism 24.

The protection plate 30 is arranged on a side of the heat exchange plate 11 distal to the battery cell 20 and is connected to the heat exchange plate 11. The reinforcing structure 40 is arranged on a side of the protection plate 30 facing away from the heat exchange plate 11 and is fixed to the protection plate 30. The reinforcing structure 40 is configured for the mounting of a seat 5 of a vehicle.

The power distribution box 50 includes a housing body 51 and an electric component 52 accommodated in the housing body 51. The housing body 51 is arranged on a side of the protection plate 30 facing away from the heat exchange plate 11 and is fixed to the protection plate 30. The electric component 52 is electrically connected to the battery cell 20.

The heat exchange plate 11 includes a first plate 112 and a second plate 113 stacked in the vertical direction Z. The first plate 112 is located on the lower side of the second plate 113 in the vertical direction Z. The first plate 112 is connected to the battery cell 20, and the second plate 113 is connected to the protection plate 30. The flow channel 111 is formed between the first plate 112 and the second plate 113.

It should be noted that unless conflicting, the embodiments and features of the embodiments in the present application may be combined with each other.

Finally, it should be noted that the above embodiments are only used to illustrate the technical solutions of the present application, but not to limit them. Although the present application has been described in detail with reference to the foregoing embodiments, those of ordinary skill in the art should understand that they can still modify the technical solutions recorded in the foregoing embodiments or make equivalent substitutions for some of the technical features; however, these modifications or substitutions do not make the essence of the corresponding technical solutions deviate from the spirit and scope of the technical solutions in the embodiments of the present application.

## Claims

1. A battery, comprising:
a case provided with an accommodating cavity, wherein the case comprises a top wall, the top wall is located on an upper side of the accommodating cavity in a vertical direction, and the top wall is internally provided with a flow channel for a heat exchange medium to flow;
a battery cell accommodated in the accommodating cavity; and
a protection plate arranged on a side of the top wall distal to the battery cell and connected to the top wall.

2. The battery according to claim 1, further comprising a reinforcing structure, wherein the reinforcing structure is arranged on a side of the protection plate facing away from the top wall and is fixed to the protection plate.

3. The battery according to claim 2, wherein the reinforcing structure is configured to be connected to an external component.

4. The battery according to claim 2 or 3, wherein the reinforcing structure comprises a beam structure.

5. The battery according to claim 2 or 3, wherein the reinforcing structure comprises a mounting plate and a first connecting member fixed to the mounting plate, the mounting plate is fixed to the protection plate, and the first connecting member is configured to be connected to the external component.

6. The battery according to any one of claims 1 to 5, wherein the case comprises a frame body, a heat exchange plate, and a bottom plate, the heat exchange plate and the bottom plate are located on an upper side and a lower side of the frame body in the vertical direction, respectively, and the frame body, the heat exchange plate, and the bottom plate define the accommodating cavity;
the top wall comprises the heat exchange plate, and the heat exchange plate is configured to exchange heat with the battery cell.

7. The battery according to claim 6, further comprising a second connecting member, wherein the second connecting member connects the protection plate, the heat exchange plate, and the frame body.

8. The battery according to claim 6 or 7, wherein the heat exchange plate comprises a first plate and a second plate stacked in the vertical direction, the first plate is located on a lower side of the second plate in the vertical direction, the first plate is a flat plate and is connected to the battery cell, and the second plate is connected to the protection plate;
a side of the second plate facing the first plate is provided with a first recess, and the first plate covers the first recess and forms the flow channel; a first protrusion is formed on the second plate at a position corresponding to the first recess, and the first protrusion protrudes toward a side distal to the first plate.

9. The battery according to any one of claims 1 to 8, wherein the top wall comprises a flow channel zone and a non-flow channel zone, and the flow channel is arranged in the flow channel zone;
in the vertical direction, a projection of the flow channel zone is located within a projection of the protection plate.

10. The battery according to any one of claims 1 to 9, wherein the top wall comprises a flow channel zone and a non-flow channel zone, and the flow channel is arranged in the flow channel zone;
in the vertical direction, the flow channel zone is spaced apart from the protection plate.

11. The battery according to any one of claims 1 to 10, wherein
the top wall comprises a flow channel zone and a non-flow channel zone, and the flow channel is arranged in the flow channel zone;
the protection plate is fixed to the non-flow channel zone; a side of the protection plate facing the top wall is provided with a second recess, and a projection of the flow channel zone in the vertical direction is located within a projection of the second recess.

12. The battery according to claim 11, wherein the non-flow channel zone has a first surface facing the protection plate, and at least a part of the flow channel zone protrudes from the first surface; a part of the flow channel zone protruding from the first surface is accommodated in the second recess.

13. The battery according to any one of claims 1 to 12, wherein the protection plate is bonded to the top wall.

14. The battery according to any one of claims 1 to 13, wherein in the vertical direction, a projection of the top wall is located within the projection of the protection plate.

15. The battery according to any one of claims 1 to 14, wherein the protection plate comprises a base zone and a thickened zone, and a thickness of the thickened zone is greater than a thickness of the base zone.

16. The battery according to any one of claims 1 to 15, wherein the protection plate comprises a metal-plastic composite material.

17. The battery according to any one of claims 1 to 16, further comprising a power distribution box, wherein the power distribution box comprises a housing body and an electric component accommodated in the housing body, the housing body is arranged on a side of the protection plate facing away from the top wall and is fixed to the protection plate, and the electric component is electrically connected to the battery cell.

18. The battery according to any one of claims 1 to 17, wherein the battery cell is fixed to the top wall.

19. The battery according to claim 18, wherein the battery cell is bonded to the top wall.

20. The battery according to claim 18 or 19, wherein a side of the battery cell distal to the top wall is provided with an electrode terminal and/or a pressure relief mechanism.

21. An electric device, comprising the battery according to any one of claims 1 to 20, wherein the battery is configured to provide electric energy.

22. The electric device according to claim 21, wherein the electric device is a vehicle.

23. The electric device according to claim 22, wherein the protection plate is at least a part of a floor of the vehicle.

24. The electric device according to claim 22 or 23, wherein the vehicle comprises a seat, and the seat is connected to the protection plate.
